# EUROPÄISCHE PATENTSCHRIFT

(11) **EP 2 129 566 B1**
(45) Veröffentlichungstag und Bekanntmachung des Hinweises auf die Patenterteilung: **04.08.2010**
(21) Anmeldenummer: 08716590.8
(22) Anmeldetag: 18.03.2008
(51) Int. Cl.: B60T 17/00, B01D 53/26

(54) **DRUCKLUFTVERSORGUNGSEINRICHTUNG FÜR EIN NUTZFAHRZEUG UND VERFAHREN ZUM BETREIBEN EINER DRUCKLUFTVERSORGUNGSEINRICHTUNG**
COMPRESSED AIR SUPPLY UNIT FOR A COMMERCIAL VEHICLE, AND METHOD FOR OPERATING A COMPRESSED AIR SUPPLY UNIT
DISPOSITIF D'ALIMENTATION EN AIR COMPRIMÉ POUR UN VÉHICULE UTILITAIRE ET PROCÉDÉ POUR LA COMMANDE D'UN DISPOSITIF D'ALIMENTATION EN AIR COMPRIMÉ

(30) Priorität: 19.03.2007 DE 102007013671
(43) Veröffentlichungstag der Anmeldung: 09.12.2009
(73) Patentinhaber: KNORR-BREMSE Systeme für Nutzfahrzeuge GmbH, 80809 München (DE)
(72) Erfinder: BORDÁCS, Zoltán, HU-8200 Veszprém (HU)
(74) Vertreter: Mattusch, Gundula
(86) Internationale Anmeldenummer: PCT/EP2008/002128
(87) Internationale Veröffentlichungsnummer: WO 2008/113549

(56) Entgegenhaltungen:
- EP-B- 1 318 936
- DE-B3-102005 057 004

## Beschreibung

Die Erfindung betrifft eine Druckluftversorgungseinrichtung für ein Nutzfahrzeug mit einem mit einem Kompressor koppelbaren Drucklufteingang, einer mit dem Drucklufteingang über eine Förderleitung gekoppelten Filtereinheit, einem mit einem Ablassausgang und der Förderleitung gekoppelten Ablassventil, einem mit einem Steuereingang des Kompressors koppelbaren Energiesparsteuerausgang und einer ersten Ventileinrichtung sowie einer zweiten Ventileinrichtung, wobei durch die Ventileinrichtungen das Ablassventil, der Energiesparsteuerausgang und die Regeneration der Filtereinheit steuerbar sind.

Weiterhin betrifft die Erfindung ein Verfahren zum Betreiben einer Druckluftversorgungseinrichtung mit einem mit einem Kompressor koppelbaren Drucklufteingang, einer mit dem Drucklufteingang über eine Förderleitung gekoppelten Filtereinheit, einem mit einem Ablassausgang und der Förderleitung gekoppelten Ablassventil, einem mit einem Steuereingang des Kompressors koppelbaren Energiesparsteuerausgang und einer ersten Ventileinrichtung sowie einer zweiten Ventileinrichtung, wobei im Rahmen des Verfahrens vorgesehen ist, dass durch die Ventileinrichtungen das Ablassventil, der Energiesparsteuerausgang und die Regeneration der Filtereinheit gesteuert werden.

Derartige Druckluftversorgungseinrichtungen erfüllen in Nutzfahrzeugen zahlreiche Aufgaben. Hierzu gehören insbesondere die Versorgung der Bremsanlage und weiterer Druckluftverbraucher mit trockener gereinigter Druckluft, die Wahrnehmung einer Mehrkreisschutzventilfunktion zur Absicherung verschiedener Verbraucherkreise gegeneinander und zur Sicherstellung einer bestimmten Füllreihenfolge sowie die Bereitstellung einer Druckreglerfunktion. Die von den Druckluftverbrauchern genutzte Druckluft wird primär durch einen Kompressor zur Verfügung gestellt, der im Allgemeinen durch den Verbrennungsmotor des Nutzfahrzeugs angetrieben wird. Bei zahlreichen Systemen lässt sich der Kompressor in einen energiesparenden Zustand überführen, entweder durch Trennen einer Kupplung, über die der Kompressor mit dem Verbrennungsmotor gekoppelt sein kann, oder durch pneumatische Ansteuerung eines Kompressorsteuereingangs, um den Kompressor in einen Leerlaufzustand zu überführen. Derartige energiesparende Maßnahmen können noch dadurch unterstützt werden, dass die Betriebsabläufe in der Druckluftversorgungseinrichtung möglichst so stattfinden, dass einmal erzeugte Druckluft nicht unnötig verloren geht. Dabei ist zu beachten, dass ein gewisser Druckluftverlust unumgänglich ist, denn die Filtereinheit der Druckluftversorgungseinrichtung muss immer wieder regeneriert werden. Zu diesem Zweck wird trockene Druckluft aus den an die Druckluftversorgungseinrichtung angeschlossenen Druckluftbehältern in einer Richtung durch die Filtereinheit geleitet, die der Förderrichtung entgegengesetzt ist. Die durch die Filtereinheit strömende Luft nimmt die Feuchtigkeit in der Filtereinheit zumindest zum Teil auf, um dann über das Ablassventil der Druckluftversorgungseinrichtung ins Freie zu strömen.

Die EP 1 318 936 B1 beschreibt eine Druckluftversorgungseinrichtung, die mit einer Regenerationsfunktion und einem Energiesparausgang zum Überführen eines Kompressors in einen Leerlaufzustand ausgestattet ist. Es sind zwei Magnetventile vorgesehen, die diese Funktionen realisieren. Dabei ist vorgesehen, dass das Öffnen des Regenerationsluftpfades mit dem Öffnen des Ablassventils gekoppelt ist. Auf diese Weise geht die Druckluft aus dem Volumen zwischen dem Ablassventil und einem stromabwärts von der Filtereinheit angeordneten, den Verbrauchern zugewandten Rückschlagventil nur dann verloren, wenn dies aufgrund der geforderten Regeneration unumgänglich ist.

Bei anderen Systemen des Standes der Technik ist vorgesehen, den Energiesparbetriebszustand an das Öffnen des Ablassventils zu koppeln, das heißt immer dann, wenn der Kompressor in einen energiesparenden Zustand überführt wird, wird auch das Ablassventil geöffnet. Ohne Gegenmaßnahmen kommt es hierdurch zu einem unnötigen Druckverlust in der gesamten Förderleitung vor einem den Verbrauchern zugewandten Rückschlagventil, das stromabwärts der Filtereinheit angeordnet ist. Der Erfindung liegt die Aufgabe zugrunde, eine Druckluftversorgungseinrichtung sowie ein Betriebsverfahren mit hohem Energiesparpotential und einer Steigerung der Funktionalität gegenüber dem Stand der Technik bereitzustellen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass durch die erste Ventileinrichtung ein erster Steuereingang der Ablassventileinrichtung, der Energiesparsteuerausgang und die Regeneration der Filtereinheit steuerbar sind und durch die zweite Ventileinrichtung ein zweiter Steuereingang der Ablassventileinrichtung steuerbar ist. Die Regeneration der Druckluftversorgungseinrichtung kann somit durch alleiniges Umschalten der ersten Ventileinrichtung erfolgen, da sowohl der Regenerationsluftpfad als auch das Ablassventil durch Umschalten der ersten Ventileinrichtung geöffnet werden können. Gleichzeitig wird durch Umschalten der ersten Ventileinrichtung der mit dem Energiesparsteuerausgang verbundene Kompressor in einen Leerlaufzustand beziehungsweise einen Betriebszustand mit vermindertem Energieverbrauch umgeschaltet. Um jedoch in der Lage zu sein, diesen Leerlaufzustand des Kompressors auch dann herbeizuführen, wenn keine Regeneration erwünscht beziehungsweise erforderlich ist, hat die Ablassventileinrichtung einen zweiten Steuereingang, der durch die zweite Ventileinrichtung ansteuerbar ist. Hierdurch kann das Ablassventil geschlossen gehalten werden, auch wenn der erste Steuereingang des Ablassventils belüftet wird.

Nützlicherweise ist vorgesehen, dass die erste Ventileinrichtung in einem ersten Schaltzustand den ersten Steuereingang der Ablassventileinrichtung entlüftet und in einem zweiten Schaltzustand den ersten Steuereingang der Ablassventileinrichtung belüftet, und dass die Ablassventileinrichtung durch Belüften des ersten Steuereingangs bei entlüftetem zweiten Steuereingang in einen geöffneten Zustand überführbar ist. Werden weder der erste noch der zweite Steuereingang des Ablassventils belüftet, so ist dieses geschlossen. Bleibt der zweite Steuereingang entlüftet, während der erste Steuereingang belüftet wird, so kann das Ablassventil geöffnet werden.

Insbesondere ist vorgesehen, dass die zweite Ventileinrichtung in einem ersten Schaltzustand den zweiten Steuereingang der Ablassventileinrichtung entlüftet und in einem zweiten Schaltzustand den zweiten Steuereingang der Ablassventileinrichtung belüftet, und dass die Ablassventileinrichtung bei belüftetem zweiten Steuereingang geschlossen ist, auch dann, wenn der erste Steuereingang belüftet ist. Dies bedeutet, dass der zweite Steuereingang des Ablassventils Priorität gegenüber dem ersten Steuereingang hat. Liegen an beiden Steuereingängen die gleichen Drücke an, so ist die Belüftung des ersten Steuereingangs wirkungslos. Erreicht werden kann dies, indem die durch die Belüftung des zweiten Steuereingangs aufgebrachte Kraft durch eine Feder unterstützt wird oder indem die Steuereingänge verschiedene wirksame Druckflächen aufweisen, so dass bei identischen Drücken unterschiedliche Kräfte auf ein Stellglied des Ablassventils wirken.

Durch die Bereitstellung von zwei Ventileinrichtungen mit jeweils zwei Schaltzuständen liegen insgesamt vier mögliche Betriebszustände vor, wobei vorgesehen ist, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein erster Förderbetriebszustand vorliegt. Der Regenerationsluftpfad ist geschlossen, der Kompressor befindet sich in seiner Förderphase, und das Ablassventil ist geschlossen.

Des Weiteren ist vorgesehen, dass in einem zweiten Betriebszustand der Druckluftversorgungseinrichtung die erste Ventileinrichtung ihren ersten Schaltzustand einnimmt und die zweite Ventileinrichtung ihren zweiten Schaltzustand einnimmt, wodurch ein zweiter Förderbetriebszustand vorliegt. Der Regenerationsluftpfad ist geschlossen, der Kompressor befindet sich in seiner Förderphase, und das Ablassventil ist geschlossen. Im Vergleich zu dem ersten Förderbetriebszustand liegt bei dem zweiten Förderbetriebszustand eine Belüftung des im ersten Förderbetriebszustand entlüfteten zweiten Steuereingangs vor. Diese führt zu keiner Veränderung des Schaltzustands der Ablassventileinrichtung, da diese auch bei entlüfteten Steuereingängen ihren geschlossenen Zustand einnimmt.

Es kann weiterhin vorgesehen sein, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Regenerationsbetriebszustand vorliegt. Der Regenerationsluftpfad ist geöffnet, das Ablassventil ist geöffnet, und der Kompressor befindet sich in seiner Leerlaufphase.

Weiterhin ist vorgesehen, dass in einem vierten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Sperrbetriebszustand vorliegt. Unabhängig davon, ob der Regenerationsluftpfad im vierten Betriebszustand geöffnet oder geschlossen ist, befindet sich das Ablassventil aufgrund des belüfteten zweiten Steuereingangs in jedem Fall in seinem geschlossenen Zustand. Folglich wird ein Abströmen von Druckluft aus dem System durch das Ablassventil gesperrt, insbesondere also auch bei geöffnetem Regenerationsluftpfad.

Gemäß einer bevorzugten Ausführungsform der vorliegenden Erfindung ist vorgesehen, dass die erste Ventileinrichtung in einem Regenerationsluftpfad der Druckluftversorgungseinrichtung angeordnet ist. Die erste Ventileinrichtung ist also Teil des Regenerationsluftpfades. Befinden sich in diesem Fall sowohl die erste Ventileinrichtung als auch die zweite Ventileinrichtung in ihrem zweiten Schaltzustand, so wird ein Abströmen von Druckluft ausschließlich dadurch verhindert, dass das Ablassventil durch Belüften des zweiten Steuereingangs geschlossen gehalten wird.

Ebenfalls kann vorgesehen sein, dass eine Regenerationsventileinrichtung vorgesehen ist, die über die erste Ventileinrichtung pneumatisch ansteuerbar ist, wobei die Regenerationsventileinrichtung in einem Regenerationsluftpfad der Druckluftversorgungseinrichtung angeordnet ist. Eine solche Regenerationsventileinrichtung kann eine günstige Lösung im Hinblick auf einen ausreichenden Durchsatz an Regenerationsluft zur Verfügung stellen. Weiterhin kann durch die Anwesenheit der Regenerationsventileinrichtung eine erweiterte Schaltlogik zur Verfügung gestellt werden.

In diesem Zusammenhang kann insbesondere vorgesehen sein, dass die Regenerationsventileinrichtung einen ersten Steuereingang aufweist, über den sie von der ersten Ventileinrichtung pneumatisch ansteuerbar ist, und dass die Regenerationsventileinrichtung einen zweiten Steuereingang aufweist, über den sie von der zweiten Ventileinrichtung pneumatisch ansteuerbar ist.

Dann kann vorgesehen sein, dass die zweite Ventileinrichtung in ihrem ersten Schaltzustand den zweiten Steuereingang der Regenerationsventileinrichtung entlüftet und in ihrem zweiten Schaltzustand den zweiten Steuereingang der Regenerationsventileinrichtung belüftet und dass die Regenerationsventileinrichtung bei belüftetem zweiten Steuereingang geschlossen ist, auch dann, wenn der erste Steuereingang belüftet ist. Befinden sich also bei einer derart in die Schaltung eingebundenen Regenerationsventileinrichtungen die beiden ansteuernden Ventileinrichtungen beide in ihrem zweiten Schaltzustand, so sind sowohl die Ablassventileinrichtung als auch die Regenerationsventileinrichtung geschlossen.

Die Erfindung ist in besonders bevorzugter Weise dadurch weitergebildet, dass die zweite Ventileinrichtung mit einer Steuerleitung gekoppelt ist, über die weitere Steuerfunktionen in der Druckluftversorgungseinrichtung realisierbar sind. Indem die meisten Aspekte der Funktionalität im Hinblick auf ein Umschalten zwischen dem Förderbetriebszustand und dem Regenerationsbetriebszustand dadurch zur Verfügung gestellt werden, dass die erste Ventileinrichtung umschaltet, während die zweite Ventileinrichtung nur im Hinblick auf die Sperrfunktion bei leerlaufendem Kompressor das Ablassventil geschlossen halten muss, können der zweiten Ventileinrichtung weitere Funktionen zugeordnet werden, insbesondere weitere Steuerfunktionen der Druckluftversorgungseinrichtung.

Beispielsweise kann vorgesehen sein, dass die Steuerleitung mit einem Steuereingang eines einen Verbraucherkreis versorgenden Überströmventils verbunden ist. Die Überströmventile, welche die Verbraucherkreise versorgen, sind im Hinblick auf ihre Öffnungs- und Schließdrücke so aufeinander abgestimmt, dass die einzelnen Verbraucherkreise gegeneinander abgesichert sind und dass eine vorgegebene Befüllungsreihenfolge eingehalten wird. Indem nun die Überströmventile mit einem Steuereingang ausgestattet sind, der mit der zur zweiten Ventileinrichtung führenden Steuerleitung verbunden ist, kann auf diese Weise Einfluss auf die Funktionen der so ansteuerbaren Überströmventile genommen werden.

Beispielsweise kann vorgesehen sein, dass durch Belüften des Steuereingangs ein Öffnen des Überströmventils unterstützt wird. Hierdurch kann ein an sich mit niedriger Priorität zu befüllender Verbraucherkreis gezielt bevorzugt befüllt werden. Dabei kann es sich insbesondere um den der Luftfederanlage des Fahrzeugs zugeordneten Druckluftkreis handeln oder um andere Kreise, die ohne Sicherheitseinbußen in einem solchen Zustand des Nutzfahrzeugs befüllt werden können, in dem noch keine ausreichende Bremswirkung erzielbar ist. Ebenfalls ist es möglich, die mit der Steuerleitung in Verbindung stehenden Überströmventile permanent offen zu halten, wodurch ein Schließen beim Unterschreiten des Schließdruckes vermieden wird.

Gemäß einem anderen Konzept kann vorgesehen sein, dass durch Belüften des Steuereingangs ein geschlossener Zustand des Überströmventils herbeigeführt und aufrechterhalten wird. Hierdurch kann insbesondere ein defekter Kreis von den anderen Kreisen getrennt werden, so dass das Druckluftsystem im Bereich seiner optimalen Betriebsdrücke weiter betrieben werden kann, ohne dass es über den defekten Kreis Druckluft verlieren würde.

Nützlicherweise ist vorgesehen, dass die Ventileinrichtungen 3/2-Wege-Ventile sind. Hierdurch können die für die beschriebenen Funktionalitäten erforderlichen Anschlüsse und Schaltzustände zur Verfügung gestellt werden.

Insbesondere kann vorgesehen sein, dass eine elektronische Steuereinheit vorgesehen ist und dass die Ventileinrichtungen Magnetventile sind. Auf diese Weise können die verschiedenen Betriebszustände der Druckluftversorgungseinrichtung auf der Grundlage intelligenter Berechnungen eingenommen werden, wobei insbesondere zahlreiche das Nutzfahrzeug betreffende Informationen berücksichtigt werden können. Diese können der elektronischen Steuereinheit direkt oder über einen Datenbus zur Verfügung gestellt werden, wobei insbesondere an einen Datenbus verschiedene andere Steuereinheiten des Nutzfahrzeugs angeschlossen sein können, um so mit der Steuereinheit der Druckluftversorgungseinrichtung Informationen auszutauschen. Weiterhin kann vorgesehen sein, dass die Ablassventileinrichtung ein 2/2-WegeVentil ist.

Ebenfalls ist es nützlich, dass die Regenerationsventileinrichtung ein 2/2-Wege-Ventil ist.

Da die Funktionalitäten der Ablassventileinrichtung und der Regenerationsventileinrichtung aufgrund der parallelen Druckbeaufschlagung ihrer Steuereingänge gekoppelt sind, ist gemäß einer weiteren Ausführungsform vorgesehen, dass die Ablassventileinrichtung und die Regenerationsventileinrichtung in ein 4/2-Wege-Ventil integriert sind. Zwei Anschlüsse des 4/2-Wege-Ventils dienen dem Ablassen von Druckluft, während die verbleibenden Anschlüsse für den Regenerationsluftpfad vorgesehen sind.

Die Erfindung baut auf dem gattungsgemäßen Verfahren dadurch auf, dass durch die erste Ventileinrichtung ein erster Steuereingang der Ablassventileinrichtung, der Energiesparsteuerausgang und die Regeneration der Filtereinheit gesteuert werden und durch die zweite Ventileinrichtung ein zweiter Steuereingang der Ablassventileinrichtung gesteuert wird. Auf diese Weise werden die Vorteile und Besonderheiten der erfindungsgemäßen Druckluftversorgungseinrichtung auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicherweise dadurch weitergebildet, dass die erste Ventileinrichtung in einem ersten Schaltzustand den ersten Steuereingang der Ablassventileinrichtung entlüftet und in einem zweiten Schaltzustand den ersten Steuereingang der Ablassventileinrichtung belüftet, und dass die Ablassventileinrichtung durch Belüften des ersten Steuereingangs bei entlüftetem zweiten Steuereingang in einen geöffneten Zustand überführt wird.

Weiterhin kann vorgesehen sein, dass die zweite Ventileinrichtung in einem ersten Schaltzustand den zweiten Steuereingang der Ablassventileinrichtung entlüftet und in einem zweiten Schaltzustand den zweiten Steuereingang der Ablassventileinrichtung belüftet, und dass die Ablassventileinrichtung bei belüftetem zweiten Steuereingang geschlossen ist, auch dann, wenn der erste Steuereingang belüftet ist.

Das Verfahren ist weiterhin dadurch besonders bevorzugt, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein erster Förderbetriebszustand vorliegt.

Weiterhin kann vorgesehen sein, dass in einem zweiten Betriebszustand der Druckluftversorgungseinrichtung die erste Ventileinrichtung ihren ersten Schaltzustand einnimmt und die zweite Ventileinrichtung ihren zweiten Schaltzustand einnimmt, wodurch ein zweiter Förderbetriebszustand vorliegt.

Es ist bevorzugt, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Regenerationsbetriebszustand vorliegt.

Weiterhin ist nützlich, dass in einem vierten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Sperrbetriebszustand vorliegt.

Gemäß einer Ausführungsform des erfindungsgemäßen Verfahrens basiert dieses darauf, dass die erste Ventileinrichtung in einem Regenerationsluftpfad der Druckluftversorgungseinrichtung angeordnet ist.

Ebenfalls kann vorgesehen sein, dass eine Regenerationsventileinrichtung über die erste Ventileinrichtung pneumatisch angesteuert wird, wobei die Regenerationsventileinrichtung in einem Regenerationsluftpfad der Druckluftversorgungseinrichtung angeordnet ist.

In diesem Fall ist es nützlich, dass die Regenerationsventileinrichtung einen ersten Steuereingang aufweist, über den sie von der ersten Ventileinrichtung pneumatisch angesteuert wird, und dass die Regenerationsventileinrichtung einen zweiten Steuereingang aufweist, über den sie von der zweiten Ventileinrichtung pneumatisch angesteuert wird.

Insbesondere ist vorgesehen, dass die zweite Ventileinrichtung in ihrem ersten Schaltzustand den zweiten Steuereingang der Regenerationsventileinrichtung entlüftet und in ihrem zweiten Schaltzustand den zweiten Steuereingang der Regenerationsventileinrichtung belüftet, und dass die Regenerationsventileinrichtung bei belüftetem zweiten Steuereingang geschlossen ist, auch dann, wenn der erste Steuereingang belüftet ist.

Gemäß einer besonders bevorzugten Ausführungsform der vorliegenden Erfindung ist vorgesehen, dass die zweite Ventileinrichtung mit einer Steuerleitung gekoppelt ist, über die weitere Steuerfunktionen in der Druckluftversorgungseinrichtung realisiert werden.

In diesem Zusammenhang ist es von besonderem Vorteil, dass die Steuerleitung mit einem Steuereingang eines einen Verbraucherkreis versorgenden Überströmventils verbunden ist.

Gemäß einer Variante ist dann vorgesehen, dass durch Belüften des Steuereingangs ein Öffnen des Überströmventils unterstützt wird.

Bei einem anderen erfindungsgemäßen Verfahren ist vorgesehen, dass durch Belüften des Steuereingangs ein geschlossener Zustand des Überströmventils herbeigeführt und aufrechterhalten wird.

Nützlicherweise ist vorgesehen, dass die Ventileinrichtungen durch eine elektronische Steuereinheit angesteuert werden.

Der Erfindung liegt die Erkenntnis zugrunde, dass ein unnötiger Energieverbrauch aufgrund des Verlustes von Druckluft durch eine intelligente Auslegung des Regenerations- und Ablasssystems der Druckluftversorgungseinrichtung zur Verfügung gestellt werden kann. Dabei wird die Druckluft im System erhalten, wann immer dies möglich ist. Das Abströmen von Druckluft wird auf die Zeiträume begrenzt, zu denen ein Abströmen aufgrund einer erforderlichen oder gewünschten Regeneration der Filtereinheit unvermeidbar ist. Die erfindungsgemäße Lösung stellt eine unabhängige Steuerung der Ablassventileinrichtung und der Energiespareinrichtung des Kompressors zur Verfügung, wenngleich das Umschalten zwischen Förderphase und Regenerationsphase durch das Umschalten einer einzigen Ventileinrichtung bewerkstelligt werden kann. Das Ablassventil wird nur während der Regeneration geöffnet oder in speziellen Spülphasen, die auf eine Verhinderung des Einfrierens einer Druckluftleitung abzielen. Dieselbe Ventileinrichtung, die, zumindest bei einigen Ausführungsformen der vorliegenden Erfindung, für das Umschalten zwischen der Regenerationsphase und dem Sperrbetriebszustand verwendet wird, kann für eine weitergehende Steuerung der Druckluftversorgungseinrichtung sorgen. Dabei können Überströmventile aufgrund eines separaten Steuereingangs kontrolliert geöffnet oder offen gehalten werden, das heißt unabhängig von ihren Öffnungs- und Schließdrücken. Ebenfalls kann vorgesehen sein, Überströmventile kontrolliert geschlossen zu halten oder zu schließen, um so die bevorzugte Befüllung von Kreisen zu ermöglichen, die mit anderen Überströmventilen in Verbindung stehen. Insbesondere kann hierdurch auch eine Beeinträchtigung der Druckluftversorgungseinrichtung aufgrund eines Kreisdefektes verhindert werden, indem nämlich das zugehörige Überströmventil geschlossen und somit der defekte Kreis abgeschottet wird. Eine solche Steuerung der Vorgänge in den verschiedenen Verbrauchkreisen kann auf der Grundlage von Druckinformationen erfolgen. Dabei können unter Vermittlung der Steuereinheit der Druckluftversorgungseinrichtung und anderer im Fahrzeug angeordneter Systeme nützliche Steuer- und Regelungskonzepte umgesetzt werden.

Die Erfindung wird nun mit Bezug auf die begleitenden Zeichnungen anhand besonders bevorzugter Ausführungsformen beispielhaft erläutert.

Es zeigen:
- Figur 1: eine schematische Teildarstellung einer ersten Ausführungsform einer erfindungsgemäßen Druckluftversorgungseinrichtung;
- Figur 2: eine schematische Teildarstellung einer zweiten Ausführungsform einer erfindungsgemäßen Druckluftversorgungseinrichtung;
- Figur 3: eine schematische Teildarstellung einer dritten Ausführungsform einer erfindungsgemäßen Druckluftversorgungseinrichtung;
- Figur 4: eine schematische Teildarstellung einer vierten Ausführungsform einer erfindungsgemäßen Druckluftversorgungseinrichtung und
- Figur 5: eine schematische Teildarstellung einer fünften Ausführungsform einer erfindungsgemäßen Druckluftversorgungseinrichtung.

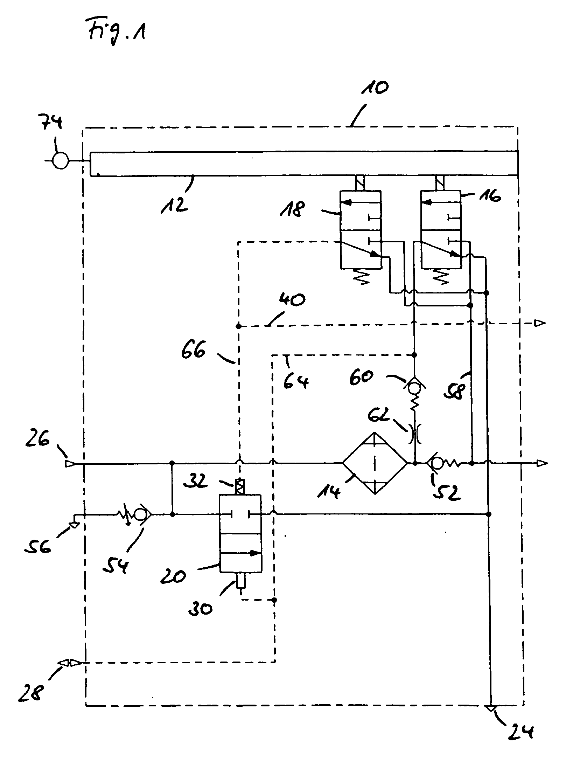

Figur 1 zeigt eine schematische Teildarstellung einer ersten Ausführungsform einer erfindungsgemäßen Druckluftversorgungseinrichtung. Die Druckluftversorgungseinrichtung 10 enthält eine elektronische Steuereinheit 12. Die Steuereinheit 12 ist über eine elektrische Schnittstelle 74 zum Zwecke der Energieversorgung und zum Signalaustausch mit anderen Fahrzeugkomponenten ausgestattet. Von der elektronischen Steuereinheit 12 sind zwei 3/2-Wege-Magnetventile 16, 18 ansteuerbar. Weitere Komponenten, beispielsweise eine Heizung, Drucksensoren und weitere Magnetventile, die im Zusammenhang mit der elektronischen Steuereinheit 12 vorgesehen sein können, sind nicht dargestellt. Die Druckluftversorgungseinrichtung hat einen mit einem Kompressor koppelbaren Drucklufteingang 26 und einen Ablassausgang 24. Zwischen dem Drucklufteingang 26 und dem Ablassausgang 24 ist ein Ablassventil 20 angeordnet. Mit dem Drucklufteingang 26 steht weiterhin eine Filtereinheit 14 in Verbindung. Über diese Filtereinheit 14 wird die dem Drucklufteingang 26 zugeführte Druckluft den Verbraucherkreisen zugeleitet, wobei auf diesem Pfad ein Rückschlagventil 52 vorgesehen ist, das ein Rückströmen von Druckluft aus den Verbraucherkreisen verhindert. Die Versorgung der Verbraucherkreise aus der mit dem Rückschlagventil 52 gekoppelten Leitung erfolgt im Allgemeinen über eine in die Druckluftversorgungseinrichtung eingebundene, hier nicht dargestellte Mehrkreisschutzventileinrichtung. Die Druckluftversorgungseinrichtung 10 hat weiterhin einen Energiesparsteuerausgang 28, an dem ein Steuereingang des mit dem Drucklufteingang 26 gekoppelten hier nicht dargestellten Kompressors angeschlossen werden kann. Ferner ist ein einstellbares Überdruckventil 54 vorgesehen, das mit einem Ablassausgang 56 gekoppelt ist. Die Überdruckventilfunktion kann auch in das Ablassventil 20 integriert sein.

Das erste Magnetventil 16 ist in einer Umgehungsleitung 58 angeordnet, die das Rückschlagventil 52 umgeht, welches an sich das Rückströmen von Druckluft aus den Verbraucherkreisen zur Filtereinheit 14 verhindert. Bei entsprechender Schaltstellung des Magnetventils 16 ist eine Rückströmung von Druckluft durch die Umgehungsleitung 58, das Magnetventil 16 und eine mit dem Magnetventil 16 in Reihe geschaltete Anordnung aus einem Rückschlagventil 60 und einer Drossel 62 aber möglich. Mit der Umgehungsleitung 58 steht eine Steuerleitung 64 in Verbindung, über die sowohl der Energiesparsteuerausgang 28 als auch ein erster Steuereingang 30 des Ablassventils 20 mit Druck beaufschlagt werden können. Ein zweiter Steuereingang 32 des Ablassventils 20 steht über eine Steuerleitung 66 mit dem zweiten Magnetventil 18 in Verbindung. Das Magnetventil 18 wird wie das Magnetventil 16 von einem Punkt mit Druckluft versorgt, der stromabwärts des Rückschlagventils 52 angeordnet ist. Bei dem dargestellten Ausführungsbeispiel liegt dieser Punkt unmittelbar stromabwärts des Rückschlagventils 52. Ebenfalls ist es aber möglich, dass die Versorgung aus Bereichen stromabwärts von hier nicht dargestellten Überströmventilen erfolgt, welche den Verbraucherkreisen zugeordnet sind. Mit der Steuerleitung 66, die das Magnetventil 18 und den zweiten Steuereingang 32 des Ablassventils 20 verbindet, ist eine weitere Steuerleitung 40 verbunden, über die weitere Steuerungsfunktionen in der Druckluftversorgungseinrichtung wahrgenommen werden können.

Im unbestromten Zustand befinden sich die Magnetventile 16, 18 in ihren dargestellten Schaltzuständen, während sie durch selektives Bestromen gegen Rückstellkräfte umgeschaltet werden können.

Sind beide Magnetventile 16, 18 stromlos, so ist der Regenerationsluftpfad aufgrund der Schaltstellung des ersten Magnetventils 16 geschlossen, während aufgrund der Schaltstellung des zweiten Magnetventils 18 die Steuereingänge 30, 32 des Ablassventils sowie der Energiesparsteuerausgang 28 entlüftet sind. Es liegt demnach ein Förderbetriebszustand vor, bei dem Druck in der Druckluftversorgungseinrichtung 10 sowie in den angeschlossenen Druckluftkreisen aufgebaut wird. Die stabile Stellung des Ablassventils 20 in seinem geöffneten Zustand wird dabei durch eine Vorspannkraft realisiert, die in dieselbe Richtung wirkt, wie eine solche Kraft, die beim Belüften des zweiten Steuereingangs 32 wirken würde.

Wird das zweite Magnetventil 18 bestromt, während das erste Magnetventil 16 unbestromt bleibt, so ändert sich an der Schaltstellung des Ablassventils 20 nichts, denn es wird lediglich zusätzlich der Steuereingang 32 belüftet, wodurch das Ablassventil 20 ebenfalls in seine geschlossene Stellung getrieben wird. Es liegt also ebenfalls ein Förderbetriebszustand vor.

Wird hingegen das erste Magnetventil 16 bestromt, während das zweite Magnetventil 18 in seinem unbestromten Zustand verbleibt, so öffnet dies den Regenerationsluftpfad. Ferner werden der Energiesparsteuerausgang 28 und der erste Steuereingang 30 des Ablassventils 20 belüftet. Da der zweite Steuereingang 32 des Ablassventils 20 entlüftet ist, erfolgt ein Umschalten des Ablassventils. Druckluft kann somit über die Umgehungsleitung 58, in der das erste Magnetventil 16, das Rückschlagventil 60 und die Drossel 62 angeordnet sind, die Filtereinheit 14, das Ablassventil 20 und den Ablassausgang 24 abströmen.

Werden beide Magnetventile 16, 18 bestromt, so ist zwar der Regenerationsluftpfad geöffnet, das Ablassventil 20 ist aber geschlossen. Dies liegt daran, dass bei identischem Druck an beiden Steuereingängen 30, 32 des Ablassventils 20 der Steuereingang 32 priorisiert ist, nämlich durch eine zusätzliche Federkraft und/oder durch entsprechende Abstimmungen der druckbeaufschlagten Wirkflächen. Das Ablassventil 20 sperrt daher trotz geöffneten Regenerationsluftpfades das Abströmen von Druckluft. Es liegt ein Sperrbetriebszustand vor.

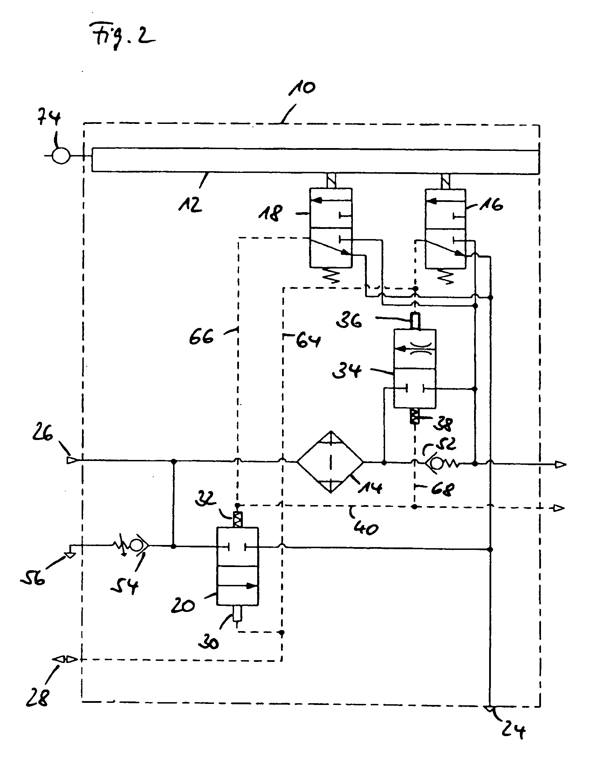

Figur 2 zeigt eine schematische Teildarstellung einer zweiten Ausführungsform einer erfindungsgemäßen Druckluftversorgungseinrichtung. Im Unterschied zu Figur 1 ist die Ventileinrichtung 16 nun nicht mehr direkt im Regenerationsluftpfad angeordnet. Vielmehr ist eine Regenerationsventileinrichtung 34 vorgesehen, die als 2/2-WegeVentil ausgelegt ist und über die die Regeneration bei entsprechender Ansteuerung erfolgen kann. Die Ansteuerung erfolgt über einen ersten Steuereingang 36, der mit dem ersten Magnetventil 16 gekoppelt ist, sowie einen zweiten Steuereingang 38, der mit dem zweiten Magnetventil 18 über eine Steuerleitung 68 gekoppelt ist.

Von der Schaltlogik her entsprechen der erste und zweite Förderbetriebszustand sowie der Regenerationsbetriebszustand der Anordnung gemäß Figur 2 den im Zusammenhang mit Figur 1 beschriebenen Zuständen. Lediglich in dem Fall, wenn beide Magnetventile 16, 18 bestromt werden, ändert sich die Schaltlogik. Dann sind nämlich beide Steuereingänge 36, 38 der Regenerationsventileinrichtung 34 belüftet. Da der zweite Steuereingang 38 gegenüber dem ersten Steuereingang 36 priorisiert ist, ist der Regenerationsluftpfad nicht geöffnet. Der Sperrbetriebszustand ist hier also durch einen geschlossenen Regenerationsluftpfad und ein geschlossenes Ablassventil 20 charakterisiert. Ablassventileinrichtung 20 und Regenerationsventileinrichtung 34 sind bei der Ausführungsform gemäß Figur 2 also stets entweder beide geschlossen oder beide geöffnet.

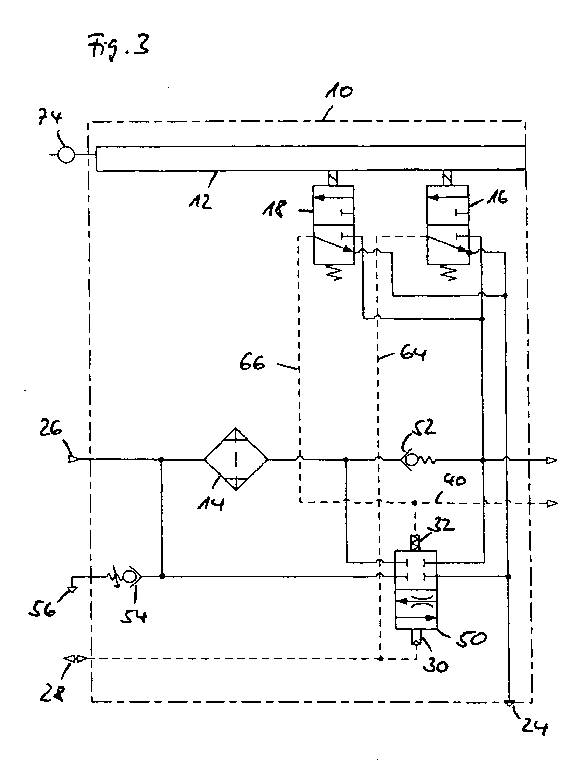

Figur 3 zeigt eine schematische Teildarstellung einer dritten Ausführungsform einer erfindungsgemäßen Druckluftversorgungseinrichtung. Hier wird das Prinzip des gleichtaktigen Betriebs von Ablassventileinrichtung und Regenerationsventileinrichtung, das bereits im Zusammenhang mit Figur 2 beschrieben wurde, in der Weise realisiert, dass die beiden Ventileinrichtungen in einer einzigen Ablass- und Regenerationsventileinrichtung 50, die als 4/2-Wege-Ventil ausgelegt ist, integriert sind. Ansonsten entspricht die Ausführungsform gemäß Figur 3 derjenigen der Figur 2.

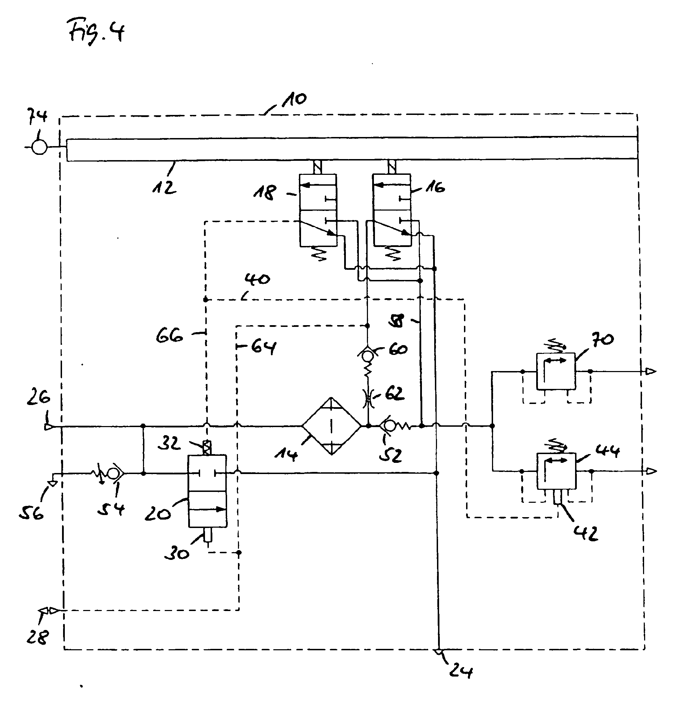

Figur 4 zeigt eine schematische Teildarstellung einer vierten Ausführungsform einer erfindungsgemäßen Druckluftversorgungseinrichtung. Es ist eine Erweiterung der Ausführungsform gemäß Figur 1 gezeigt, wobei die nachfolgend beschriebenen Besonderheiten auch bei einer analogen Erweiterung der Ausführungsformen gemäß Figur 2 oder 3 bestehen können. Es sind beispielhaft zwei Überströmventile 44, 70 dargestellt, über die verschiedene Verbraucherkreise mit Druckluft versorgt werden können. Diese Überströmventile 44, 70 haben bestimmte Öffnungs- und Schließdrücke, so dass eine Füllreihenfolge eingehalten wird und die Verbraucherkreise gegeneinander abgesichert werden. Das Überströmventil 44 hat zusätzlich einen Steuereingang 42, der mit der zu dem zweiten Magnetventil 18 führenden Steuerleitung 40 verbunden ist. Wird dieser Steuereingang 42 belüftet, so wird das Überströmventil 44 geöffnet, beziehungsweise in seinem geöffneten Zustand gehalten. Folglich kann durch Umschalten des Magnetventils 18 ein Verbraucherkreis unabhängig von dem an dem Überströmventil 44 anstehenden Druck befüllt werden.

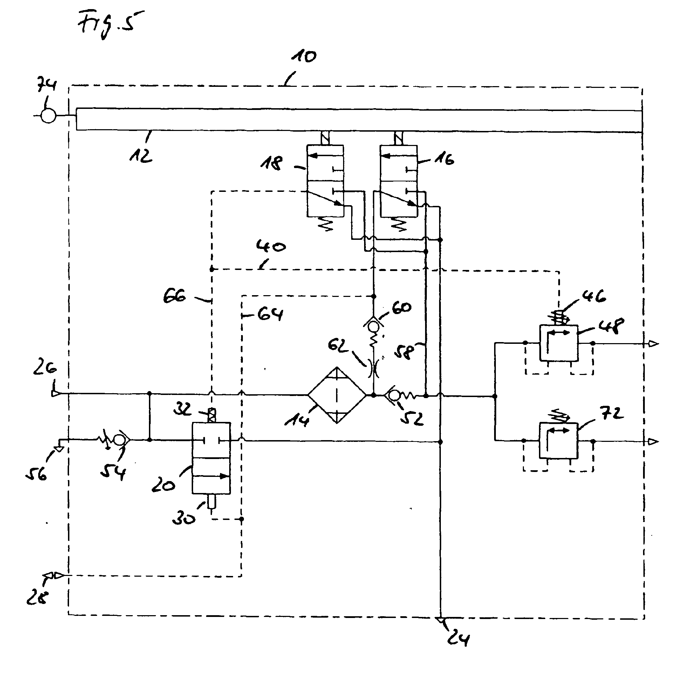

Figur 5 zeigt eine schematische Teildarstellung einer fünften Ausführungsform einer erfindungsgemäßen Druckluftversorgungseinrichtung. Auch hier sind Überströmventile 48, 72 zur Versorgung von Verbraucherkreisen vorgesehen, wobei die Anordnung ansonsten derjenigen der Figur 1 entspricht. Wiederum kann eine vergleichbare Anordnung auch auf der Grundlage der Anordnungen gemäß den Figuren 2 und 3 bereitgestellt werden. Im Gegensatz zu Figur 4 wird hier das Schließen des Überströmventils 48 beim Belüften eines dem Überströmventil 48 zugeordneten Steuereingangs 46 unterstützt. Durch entsprechende Schaltung des Magnetventils 18 kann somit das Überströmventil 48 geschlossen gehalten werden. Es können also die restlichen Verbraucherkreise priorisiert befüllt werden, beziehungsweise der mit dem Überströmventil 48 in Verbindung stehende Verbraucherkreis kann gegen den Rest der Druckluftversorgungseinrichtung und die anderen Verbraucherkreise abgeschottet werden.

Im Zusammenhang mit der in Figur 2 dargestellten Ausführungsformen einer erfindungsgemäßen Druckluftversorgungseinrichtung ist noch zu erwähnen, dass diese nicht unbedingt an die dargestellte Auslegung der Regenerationsventilseinrichtung 34 gebunden ist. Beispielsweise ist es möglich, die Steuerleitung 68 und den zweiten Steuereingang 38 fortzulassen und die Regenerationsventileinrichtung 34 durch eine beliebige Rückstellkraft in der dargestellten Schaltstellung zu halten. Dies ergibt im Zusammenhang mit der Anhand von Figur 2 beschriebenen Ausführungsform lediglich den Unterschied, dass im Sperrbetriebszustand, das heißt in dem Zustand, bei dem beide Magnetventile 16, 18 bestromt sind, der Regenerationsluftpfad geöffnet ist. Die Schaltlogik entspräche also derjenigen der Figur 1.

### Bezugszeichenliste:

- 10: Druckluftversorgungseinrichtung
- 12: Steuereinheit
- 14: Filtereinheit
- 16: Ventileinrichtung
- 18: Ventileinrichtung
- 20: Ablassventileinrichtung
- 24: Ablassausgang
- 26: Drucklufteingang
- 28: Energiesparsteuerausgang
- 30: Steuereingang
- 32: Steuereingang
- 34: Regenerationsventileinrichtung
- 36: Steuereingang
- 38: Steuereingang
- 40: Steuerleitung
- 42: Steuereingang
- 44: Überströmventil
- 46: Steuereingang
- 48: Überströmventil
- 50: Ablass- und Regenerationsventileinrichtung
- 52: Rückschlagventil
- 54: Überdruckventil
- 56: Ablassausgang
- 58: Umgehungsleitung
- 60: Rückschlagventil
- 62: Drossel
- 64: Steuerleitung
- 66: Steuerleitung
- 68: Steuerleitung
- 70: Überströmventil
- 72: Überströmventil
- 74: Schnittstelle

## Patentansprüche

1. Druckluftversorgungseinrichtung (10) für ein Nutzfahrzeug mit
- einem mit einem Kompressor koppelbaren Drucklufteingang (26),
- einer mit dem Drucklufteingang (26) über eine Förderleitung gekoppelten Filtereinheit (14),
- einer mit einem Ablassausgang (24) und der Förderleitung gekoppelten Ablassventileinrichtung (20, 50),
- einem mit einem Steuereingang des Kompressors koppelbaren Energiesparsteuerausgang (28) und
- einer ersten Ventileinrichtung (16) sowie einer zweiten Ventileinrichtung (18), wobei durch die Ventileinrichtungen (16, 18) die Ablassventileinrichtung (20), der Energiesparsteuerausgang (28) und die Regeneration der Filtereinheit (14) steuerbar sind,
**dadurch gekennzeichnet, dass** durch die erste Ventileinrichtung (16) ein erster Steuereingang (30) der Ablassventileinrichtung (20, 50), der Energiesparsteuerausgang (28) und die Regeneration der Filtereinheit (14) steuerbar sind und durch die zweite Ventileinrichtung (18) ein zweiter Steuereingang (32) der Ablassventileinrichtung (20, 50) steuerbar ist.

2. Druckluftversorgungseinrichtung (10) nach Anspruch 1, **dadurch gekennzeichnet, dass** die erste Ventileinrichtung (16) in einem ersten Schaltzustand den ersten Steuereingang (30) der Ablassventileinrichtung (20, 50) entlüftet und in einem zweiten Schaltzustand den ersten Steuereingang der Ablassventileinrichtung belüftet, und dass die Ablassventileinrichtung durch Belüften des ersten Steuereingangs bei entlüftetem zweiten Steuereingang (32) in einen geöffneten Zustand überführbar ist.

3. Druckluftversorgungseinrichtung (10) nach Anspruch 1 oder 2, **dadurch gekennzeichnet, dass** die zweite Ventileinrichtung (16) in einem ersten Schaltzustand den zweiten Steuereingang (32) der Ablassventileinrichtung (20, 50) entlüftet und in einem zweiten Schaltzustand den zweiten Steuereingang der Ablassventileinrichtung (20, 50) belüftet, und dass die Ablassventileinrichtung bei belüftetem zweiten Steuereingang geschlossen ist, auch dann, wenn der erste Steuereingang (30) belüftet ist.

4. Druckluftversorgungseinrichtung (10) nach Anspruch 3, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein erster Förderbetriebszustand vorliegt.

5. Druckluftversorgungseinrichtung (10) nach Anspruch 3 oder 4, **dadurch gekennzeichnet, dass** in einem zweiten Betriebszustand der Druckluftversorgungseinrichtung die erste Ventileinrichtung (16) ihren ersten Schaltzustand einnimmt und die zweite Ventileinrichtung (18) ihren zweiten Schaltzustand einnimmt, wodurch ein zweiter Förderbetriebszustand vorliegt.

6. Druckluftversorgungseinrichtung (10) nach einem der Ansprüche 3 bis 5, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Regenerationsbetriebszustand vorliegt.

7. Druckluftversorgungseinrichtung (10) nach einem der Ansprüche 3 bis 6, **dadurch gekennzeichnet, dass** in einem vierten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Sperrbetriebszustand vorliegt.

8. Druckluftversorgungseinrichtung (10) nach einem der vorhergehenden Ansprüche, **dadurch gekennzeichnet, dass** die erste Ventileinrichtung (16) in einem Regenerationsluftpfad der Druckluftversorgungseinrichtung angeordnet ist.

9. Druckluftversorgungseinrichtung (10) nach einem der Ansprüche 1 bis 7, **dadurch gekennzeichnet, dass** eine Regenerationsventileinrichtung (34) vorgesehen ist, die über die erste Ventileinrichtung (16) pneumatisch ansteuerbar ist, wobei die Regenerationsventileinrichtung in einem Regenerationsluftpfad der Druckluftversorgungseinrichtung angeordnet ist.

10. Druckluftversorgungseinrichtung (10) nach Anspruch 9, **dadurch gekennzeichnet, dass** die Regenerationsventileinrichtung (34) einen ersten Steuereingang (36) aufweist, über den sie von der ersten Ventileinrichtung (16) pneumatisch ansteuerbar ist, und dass die Regenerationsventileinrichtung einen zweiten Steuereingang (38) aufweist, über den sie von der zweiten Ventileinrichtung (18) pneumatisch ansteuerbar ist.

11. Druckluftversorgungseinrichtung (10) nach Anspruch 10, **dadurch gekennzeichnet, dass** die zweite Ventileinrichtung (18) in ihrem ersten Schaltzustand den zweiten Steuereingang (38) der Regenerationsventileinrichtung (34) entlüftet und in ihrem zweiten Schaltzustand den zweiten Steuereingang der Regenerationsventileinrichtung belüftet, und dass die Regenerationsventileinrichtung (34) bei belüftetem zweiten Steuereingang (38) geschlossen ist, auch dann, wenn der erste Steuereingang (36) belüftet ist.

12. Druckluftversorgungseinrichtung (10) nach einem der vorhergehenden Ansprüche, **dadurch gekennzeichnet, dass** die zweite Ventileinrichtung (18) mit einer Steuerleitung (40) gekoppelt ist, über die weitere Steuerfunktionen in der Druckluftversorgungseinrichtung realisierbar sind.

13. Druckluftversorgungseinrichtung (10) nach Anspruch 12, **dadurch gekennzeichnet, dass** die Steuerleitung (40) mit einem Steuereingang (42, 46) eines einen Verbraucherkreis versorgenden Überströmventils (44, 48) verbunden ist.

14. Druckluftversorgungseinrichtung (10) nach Anspruch 13, **dadurch gekennzeichnet, dass** durch Belüften des Steuereingangs (42) ein Öffnen des Überströmventils (44) unterstützt wird.

15. Druckluftversorgungseinrichtung (10) nach Anspruch 13, **dadurch gekennzeichnet, dass** durch Belüften des Steuereingangs (46) ein geschlossener Zustand des Überströmventils (48) herbeigeführt und aufrechterhalten wird.

16. Druckluftversorgungseinrichtung (10) nach einem der vorhergehenden Ansprüche, **dadurch gekennzeichnet, dass** die Ventileinrichtungen (16, 18) 3/2-WegeVentile sind.

17. Druckluftversorgungseinrichtung (10) nach einem der vorhergehenden Ansprüche, **dadurch gekennzeichnet, dass** eine elektronische Steuereinheit (12) vorgesehen ist und dass die Ventileinrichtungen (16, 18) Magnetventile sind.

18. Druckluftversorgungseinrichtung (10) nach einem der vorhergehenden Ansprüche, **dadurch gekennzeichnet, dass** die Ablassventileinrichtung (20) ein 2/2-Wege-Ventil ist.

19. Druckluftversorgungseinrichtung (10) nach einem der Ansprüche 9 bis 18, **dadurch gekennzeichnet, dass** die Regenerationsventileinrichtung (34) ein 2/2-Wege-Ventil ist.

20. Druckluftversorgung nach einem der Ansprüche 9 bis 18, **dadurch gekennzeichnet, dass** die Ablassventileinrichtung und die Regenerationsventileinrichtung in ein 4/2-Wege-Ventil (50) integriert sind.

21. Verfahren zum Betreiben einer Druckluftversorgungseinrichtung (10) mit einem mit einem Kompressor koppelbaren Drucklufteingang (26), einer mit dem Drucklufteingang (26) über eine Förderleitung gekoppelten Filtereinheit (14), einer mit einem Ablassausgang (24) und der Förderleitung gekoppelten Ablassventileinrichtung (20, 50), einem mit einem Steuereingang des Kompressors koppelbaren Energiesparsteuerausgang (28) und einer ersten Ventileinrichtung (16) sowie einer zweiten Ventileinrichtung (18), wobei im Rahmen des Verfahrens vorgesehen ist, dass durch die Ventileinrichtungen (16, 18) die Ablassventileinrichtung (20), der Energiesparsteuerausgang (28) und die Regeneration der Filtereinheit (14) gesteuert werden, **dadurch gekennzeichnet, dass** durch die erste Ventileinrichtung (16) ein erster Steuereingang (30) der Ablassventileinrichtung (20, 50), der Energiesparsteuerausgang (28) und die Regeneration der Filtereinheit (14) gesteuert werden und durch die zweite Ventileinrichtung (18) ein zweiter Steuereingang (32) der Ablassventileinrichtung (20, 50) gesteuert wird.

22. Verfahren (10) nach Anspruch 21, **dadurch gekennzeichnet, dass** die erste Ventileinrichtung (16) in einem ersten Schaltzustand den ersten Steuereingang (30) der Ablassventileinrichtung (20, 50) entlüftet und in einem zweiten Schaltzustand den ersten Steuereingang der Ablassventileinrichtung belüftet, und dass die Ablassventileinrichtung durch Belüften des ersten Steuereingangs bei entlüftetem zweiten Steuereingang (32) in einen geöffneten Zustand überführt wird.

23. Verfahren (10) nach Anspruch 21 oder 22, **dadurch gekennzeichnet, dass** die zweite Ventileinrichtung (16) in einem ersten Schaltzustand den zweiten Steuereingang (32) der Ablassventileinrichtung (20, 50) entlüftet und in einem zweiten Schaltzustand den zweiten Steuereingang der Ablassventileinrichtung belüftet, und dass die Ablassventileinrichtung (20, 50) bei belüftetem zweiten Steuereingang geschlossen ist, auch dann, wenn der erste Steuereingang (30) belüftet ist.

24. Verfahren (10) nach Anspruch 23, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein erster Förderbetriebszustand vorliegt.

25. Verfahren (10) nach Anspruch 23 oder 24, **dadurch gekennzeichnet, dass** in einem zweiten Betriebszustand der Druckluftversorgungseinrichtung die erste Ventileinrichtung (16) ihren ersten Schaltzustand einnimmt und die zweite Ventileinrichtung (18) ihren zweiten Schaltzustand einnimmt, wodurch ein zweiter Förderbetriebszustand vorliegt.

26. Verfahren (10) nach einem der Ansprüche 23 bis 25, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Regenerationsbetriebszustand vorliegt.

27. Verfahren (10) nach einem der Ansprüche 23 bis 26, **dadurch gekennzeichnet, dass** in einem vierten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Sperrbetriebszustand vorliegt.

28. Verfahren (10) nach einem der Ansprüche 21 bis 27, **dadurch gekennzeichnet, dass** die erste Ventileinrichtung (16) in einem Regenerationsluftpfad der Druckluftversorgungseinrichtung angeordnet ist.

29. Verfahren (10) nach einem der Ansprüche 21 bis 27, **dadurch gekennzeichnet, dass** eine Regenerationsventileinrichtung (34) über die erste Ventileinrichtung (16) pneumatisch angesteuert wird, wobei die Regenerationsventileinrichtung in einem Regenerationsluftpfad der Druckluftversorgungseinrichtung angeordnet ist.

30. Verfahren (10) nach Anspruch 29, **dadurch gekennzeichnet, dass** die Regenerationsventileinrichtung (34) einen ersten Steuereingang (36) aufweist, über den sie von der ersten Ventileinrichtung (16) pneumatisch angesteuert wird, und dass die Regenerationsventileinrichtung einen zweiten Steuereingang (38) aufweist, über den sie von der zweiten Ventileinrichtung (18) pneumatisch angesteuert wird.

31. Verfahren (10) nach Anspruch 30, **dadurch gekennzeichnet, dass** die zweite Ventileinrichtung (18) in ihrem ersten Schaltzustand den zweiten Steuereingang (38) der Regenerationsventileinrichtung (34) entlüftet und in ihrem zweiten Schaltzustand den zweiten Steuereingang der Regenerationsventileinrichtung belüftet, und dass die Regenerationsventileinrichtung (34) bei belüftetem zweiten Steuereingang (38) geschlossen ist, auch dann, wenn der erste Steuereingang (36) belüftet ist.

32. Verfahren (10) nach einem der Ansprüche 21 bis 31, **dadurch gekennzeichnet, dass** die zweite Ventileinrichtung (18) mit einer Steuerleitung (40) gekoppelt ist, über die weitere Steuerfunktionen in der Druckluftversorgungseinrichtung realisiert werden.

33. Verfahren (10) nach Anspruch 32, **dadurch gekennzeichnet, dass** die Steuerleitung (40) mit einem Steuereingang (42, 46) eines einen Verbraucherkreis versorgenden Überströmventils (44, 48) verbunden ist.

34. Verfahren (10) nach Anspruch 33, **dadurch gekennzeichnet, dass** durch Belüften des Steuereingangs (42) ein Öffnen des Überströmventils (44) unterstützt wird.

35. Verfahren (10) nach Anspruch 33, **dadurch gekennzeichnet, dass** durch Belüften des Steuereingangs (46) ein geschlossener Zustand des Überströmventils (48) herbeigeführt und aufrechterhalten wird.

36. Verfahren (10) nach einem der Ansprüche 21 bis 35, **dadurch gekennzeichnet, dass** die Ventileinrichtungen (16, 18) durch eine elektronische Steuereinheit (12) angesteuert werden.

## Claims

1. A compressed air supply unit (10) for a commercial vehicle having
- a compressed air inlet (26) that can be coupled to a compressor,
- a filter module (14) coupled to the compressed air inlet (26) via a delivery line,
- a discharge valve unit (20, 50) coupled to a discharge outlet (24) and the delivery line,
- an energy-saving control outlet (28) that can be coupled to a control inlet of the compressor and
- a first valve unit (16) together with a second valve unit (18), the valve units (16, 18) serving to control the discharge valve unit (20), the energy-saving control outlet (28) and the regeneration of the filter module (14),
**characterized in that** the first valve unit (16) serves to control a first control inlet (30) of the discharge valve unit (20, 50), the energy-saving control outlet (28) and the regeneration of the filter module (14), and the second valve unit (18) serves to control a second control inlet (32) of the discharge valve unit (20, 50).

2. The compressed air supply unit (10) as claimed in claim 1, **characterized in that** the first valve unit (16) evacuates the first control inlet (30) of the discharge valve unit (20, 50) in a first switching state and ventilates the first control inlet of the discharge valve unit in a second switching state, and **in that** the discharge valve unit is brought into an opened state by ventilation of the first control inlet when the second control inlet (32) is evacuated.

3. The compressed air supply unit (10) as claimed in claim 1 or 2, **characterized in that** the second valve unit (16) evacuates the second control inlet (32) of the discharge valve unit (20, 50) in a first switching state and ventilates the second control inlet of the discharge valve unit (20, 50) in a second switching state, and **in that** the discharge valve unit is closed when the second control inlet is ventilated, even when the first control inlet (30) is ventilated.

4. The compressed air supply unit (10) as claimed in claim 3, **characterized in that** in a first operating state of the compressed air supply unit the first valve unit (16) assumes its first switching state and the second valve unit (18) assumes its first switching state, so that a first delivery operating state prevails.

5. The compressed air supply unit (10) as claimed in claim 3 or 4, **characterized in that** in a second operating state of the compressed air supply unit the first valve unit (16) assumes its first switching state and the second valve unit (18) assumes its second switching state, so that a second delivery operating state prevails.

6. The compressed air supply unit (10) as claimed in one of claims 3 to 5, **characterized in that** in a third operating state of the compressed air supply unit the first valve unit (16) assumes its second switching state and the second valve unit (18) assumes its first switching state, so that a regeneration operating state prevails.

7. The compressed air supply unit (10) as claimed in one of claims 3 to 6, **characterized in that** in a fourth operating state of the compressed air supply unit the first valve unit (16) assumes its second switching state and the second valve unit (18) assumes its second switching state, so that a closed operating state prevails.

8. The compressed air supply unit (10) as claimed in one of the preceding claims, **characterized in that** the first valve unit (16) is arranged in a regeneration air path of the compressed air supply unit.

9. The compressed air supply unit (10) as claimed in one of claims 1 to 7, **characterized in that** a regeneration valve unit (34) is provided, which can be pneumatically actuated via the first valve unit (16), the regeneration valve unit being arranged in a regeneration air path of the compressed air supply unit.

10. The compressed air supply unit (10) as claimed in claim 9, **characterized in that** the regeneration valve unit (34) has a first control inlet (36), via which it can be pneumatically actuated by the first valve unit (16), and **in that** the regeneration valve unit has a second control inlet (38), via which it can be pneumatically actuated by the second valve unit (18).

11. The compressed air supply unit (10) as claimed in claim 10, **characterized in that** the second valve unit (18) evacuates the second control inlet (38) of the regeneration valve unit (34) in its first switching state and ventilates the second control inlet of the regeneration valve unit in its second switching state, and **in that** the regeneration valve unit (34) is closed when the second control inlet (38) is ventilated, even when the first control inlet (36) is ventilated.

12. The compressed air supply unit (10) as claimed in one of the preceding claims, **characterized in that** the second valve unit (18) is coupled to a control line (40), which serves to perform further control functions in the compressed air supply unit.

13. The compressed air supply unit (10) as claimed in claim 12, **characterized in that** the control line (40) is connected to a control inlet (42, 46) of an overflow valve (44, 48) supplying a consumer circuit.

14. The compressed air supply unit (10) as claimed in claim 13, **characterized in that** opening of the overflow valve (44) is assisted by ventilation of the control inlet (42).

15. The compressed air supply unit (10) as claimed in claim 13, **characterized in that** ventilation of the control inlet (46) serves to bring about and maintain a closed state of the overflow valve (48).

16. The compressed air supply unit (10) as claimed in one of the preceding claims, **characterized in that** the valve units (16, 18) are 3/2-way valves.

17. The compressed air supply unit (10) as claimed in one of the preceding claims, **characterized in that** an electronic control module (12) is provided and **in that** the valve units (16, 18) are solenoid valves.

18. The compressed air supply unit (10) as claimed in one of the preceding claims, **characterized in that** the discharge valve unit (20) is a 2/2-way valve.

19. The compressed air supply unit (10) as claimed in one of claims 9 to 18, **characterized in that** the regeneration valve unit (34) is a 2/2-way valve.

20. A compressed air supply as claimed in one of claims 9 to 18, **characterized in that** the discharge valve unit and the regeneration valve unit are integrated into a 4/2-way valve (50).

21. A method for operating a compressed air supply unit (10) having a compressed air inlet (26) that can be coupled to a compressor, a filter module (14) coupled to the compressed air inlet (26) via a delivery line, a discharge valve unit (20, 50) coupled to a discharge outlet (24) and the delivery line, an energy-saving control outlet (28) that can be coupled to a control inlet of the compressor, and a first valve unit (16) together with a second valve unit (18), the valve units (16, 18) serving to control the discharge valve unit (20), the energy-saving control outlet (28) and the regeneration of the filter module (14), **characterized in that** the first valve unit (16) serves to control a first control inlet (30) of the discharge valve unit (20, 50), the energy-saving control outlet (28) and the regeneration of the filter module (14), and the second valve unit (18) serves to control a second control inlet (32) of the discharge valve unit (20, 50).

22. The method as claimed in claim 21, **characterized in that** the first valve unit (16) evacuates the first control inlet (30) of the discharge valve unit (20, 50) in a first switching state and ventilates the first control inlet of the discharge valve unit in a second switching state, and **in that** the discharge valve unit is brought into an opened state by ventilation of the first control inlet when the second control inlet (32) is evacuated.

23. The method as claimed in claim 21 or 22, **characterized in that** the second valve unit (16) evacuates the second control inlet (32) of the discharge valve unit (20, 50) in a first switching state and ventilates the second control inlet of the discharge valve unit in a second switching state, and **in that** the discharge valve unit (20, 50) is closed when the second control inlet is ventilated, even when the first control inlet (30) is ventilated.

24. The method as claimed in claim 23, **characterized in that** in a first operating state of the compressed air supply unit the first valve unit (16) assumes its first switching state and the second valve unit (18) assumes its first switching state, so that a first delivery operating state prevails.

25. The method as claimed in claim 23 or 24, **characterized in that** in a second operating state of the compressed air supply unit the first valve unit (16) assumes its first switching state and the second valve unit (18) assumes its second switching state, so that a second delivery operating state prevails.

26. The method as claimed in one of claims 23 to 25, **characterized in that** in a third operating state of the compressed air supply unit the first valve unit (16) assumes its second switching state and the second valve unit (18) assumes its first switching state, so that a regeneration operating state prevails.

27. The method as claimed in one of claims 23 to 26, **characterized in that** in a fourth operating state of the compressed air supply unit the first valve unit (16) assumes its second switching state and the second valve unit (18) assumes its second switching state, so that a closed operating state prevails.

28. The method as claimed in one of claims 21 to 27, **characterized in that** the first valve unit (16) is arranged in a regeneration air path of the compressed air supply unit.

29. The method as claimed in one of claims 21 to 27, **characterized in that** a regeneration valve unit (34) is pneumatically actuated via the first valve unit (16), the regeneration valve unit being arranged in a regeneration air path of the compressed air supply unit.

30. The method as claimed in claim 29, **characterized in that** the regeneration valve unit (34) has a first control inlet (36), via which it can be pneumatically actuated by the first valve unit (16), and **in that** the regeneration valve unit has a second control inlet (38) via which it can be pneumatically actuated by the second valve unit (18).

31. The method as claimed in claim 30, **characterized in that** the second valve unit (18) evacuates the second control inlet (38) of the regeneration valve unit (34) in its first switching state and ventilates the second control inlet of the regeneration valve unit in its second switching state, and **in that** the regeneration valve unit (34) is closed when the second control inlet (38) is ventilated, even when the first control inlet (36) is ventilated.

32. The method as claimed in one of claims 21 to 31, **characterized in that** the second valve unit (18) is coupled to a control line (40), which serves to perform further control functions in the compressed air supply unit.

33. The method as claimed in claim 32, **characterized in that** the control line (40) is connected to a control inlet (42, 46) of an overflow valve (44, 48) supplying a consumer circuit.

34. The method as claimed in claim 33, **characterized in that** opening of the overflow valve (44) is assisted by ventilation of the control inlet (42).

35. The method as claimed in claim 33, **characterized in that** ventilation of the control inlet (46) serves to bring about and maintain a closed state of the overflow valve (48).

36. The method as claimed in one of claims 21 to 35, **characterized in that** the valve units (16, 18) are actuated by an electronic control module (12).

## Revendications

1. Dispositif d'alimentation en air comprimé (10) pur un véhicule utilitaire, comprenant
- une entrée d'air comprimé (26) apte à être couplé à un compresseur,
- une unité filtre (14) couplé via une ligne d'alimentation à ladite entrée d'air comprimé (26),
- un moyen à soupape de décharge (20, 50) couplé à une sortie de décharge (24) et à ladite ligne d'alimentation,
- une sortie de commande à économie d'énergie, qui est apte à être couplé à une entrée de commande dudit compresseur, et
- un premier moyen à soupape (16) ainsi qu'un deuxième moyen à soupape (18), dans lequel ledit moyen à soupape de décharge (20), ladite sortie de commande à économie d'énergie (28) et la régénération de ladite unité filtre (14) sont commandables moyennant lesdites moyens à soupape (16, 18),
**caractérisé en ce qu'**une première entrée de commande (30) dudit moyen à soupape de décharge (20, 50), ladite sortie de commande à économie d'énergie (28) et la régénération de ladite unité filtre (14) sont commandable moyennant ledit premier moyen à soupape (16), pendant qu'une deuxième entrée de commande (32) dudit moyen à soupape de désaération (20, 50) est commandable moyennant ledit premier moyen à soupape (18).

2. Dispositif d'alimentation en air comprimé (10) selon la revendication 1, **caractérisé en ce qu'**en un premier état de réglage, ledit premier moyen à soupape (16) désaère ladite première entrée de commande (30) dudit moyen à soupape de décharge (20, 50) et, en un deuxième état de réglage, ventile ladite première entrée de commande dudit moyen à soupape de décharge, et **en ce que** ledit moyen à soupape de décharge est apte à être changé en un état ouvert, quand ladite deuxième entrée de commande (32) est désaéré, par ventilation de ladite première entrée de commande.

3. Dispositif d'alimentation en air comprimé (10) selon la revendication 1 ou 2, **caractérisé en ce qu'**en un premier état de réglage, ledit deuxième moyen à soupape (16) désaère ladite deuxième entrée de commande (32) dudit moyen à soupape de décharge (20, 50) et, en un deuxième d'état de réglage, ventile ladite deuxième entrée de commande dudit moyen à soupape de décharge (20, 50), et **en ce que** ledit moyen à soupape de décharge est fermé, quand ladite deuxième entrée de commande est ventilé, même quand ladite première entrée de commande (30) est ventilée.

4. Dispositif d'alimentation en air comprimé (10) selon la revendication 3, **caractérisé en ce qu'**en un premier état de fonctionnement du dispositif d'alimentation en air comprimé, ledit premier moyen à soupape (16) se place en son premier état de réglage et ledit deuxième moyen à soupape (18) se place en son premier état de réglage, ce qui établit un premier état de fonctionnement en alimentation.

5. Dispositif d'alimentation en air comprimé (10) selon la revendication 3 ou 4, **caractérisé en ce qu'**un un deuxième état de fonctionnement du dispositif d'alimentation en air comprimé, ledit premier moyen à soupape (16) se place en son premier état de réglage et ledit deuxième moyen à soupape (18) se place en son deuxième état de réglage, ce qui établit un deuxième état de fonctionnement en alimentation.

6. Dispositif d'alimentation en air comprimé (10) selon une quelconque des revendications 3 à 5, **caractérisé en ce qu'**en un troisième état de fonctionnement du dispositif d'alimentation en air comprimé, ledit premier moyen à soupape (16) se place en son deuxième état de réglage et ledit deuxième moyen à soupape (18) se place en son premier état de réglage, ce qui établit un état de fonctionnement en régénération.

7. Dispositif d'alimentation en air comprimé (10) selon une quelconque des revendications 3 à 6, **caractérisé en ce qu'**en un quatrième état de fonctionnement du dispositif d'alimentation en air comprimé, ledit premier moyen à soupape (16) se place en son deuxième état de réglage et ledit deuxième moyen à soupape (18) se place en son deuxième état de réglage, ce qui mène à un état de fonctionnement en blocage.

8. Dispositif d'alimentation en air comprimé (10) selon une quelconque des revendications précédentes, **caractérisé en ce que** ledit premier moyen à soupape (16) est disposé dans une voie d'air de régénération du dispositif d'alimentation en air comprimé.

9. Dispositif d'alimentation en air comprimé (10) selon une quelconque des revendications 1 à 7, **caractérisé en ce qu'**un moyen à soupape de régénération (34) est disposé, qui est commandable de manière pneumatique via ledit premier moyen à soupape (16), audit moyen à soupape de régénération étant disposé dans une voie d'air de régénération du dispositif d'alimentation en air comprimé.

10. Dispositif d'alimentation en air comprimé (10) selon la revendication 9, **caractérisé en ce que** ledit moyen à soupape de régénération (34) comprend une première entrée de commande (36), via laquelle il est commandable, de manière pneumatique, par ledit premier moyen à soupape (16), et **en ce que** ledit moyen à soupape de régénération comprend une deuxième entrée de commande (38), via laquelle il est commandable, de manière pneumatique, par ledit deuxième moyen à soupape (18).

11. Dispositif d'alimentation en air comprimé (10) selon la revendication 10, **caractérisé en ce qu'**en son premier état de réglage, ledit deuxième moyen à soupape (18) désaère ladite deuxième entrée de commande (38) dudit moyen à soupape de régénération (34) et, en son deuxième état de réglage, ventile ladite deuxième entrée de commande dudit moyen à soupape de régénération, et **en ce que** ledit moyen à soupape de régénération (34) est fermé, quand ladite deuxième entrée de commande (38) est ventilée, même quand ladite première entrée de commande (36) est ventilée.

12. Dispositif d'alimentation en air comprimé (10) selon une quelconque des revendications précédentes, **caractérisé en ce que** ledit deuxième moyen à soupape (18) est couplé à une ligne de commande (40), via laquelle des fonctions de commande additionnelles sont réalisables dans le dispositif d'alimentation en air comprimé.

13. Dispositif d'alimentation en air comprimé (10) selon la revendication 12, **caractérisé en ce que** ladite ligne de commande (40) est relié à une entrée de commande (42, 46) d'une soupape de décharge (44, 48) alimentant un circuit de charge.

14. Dispositif d'alimentation en air comprimé (10) selon la revendication 13, **caractérisé en ce qu'**une ouverture de ladite soupape de charge (44) est assistée par la désaération de ladite entrée de commande (42).

15. Dispositif d'alimentation en air comprimé (10) selon la revendication 13, **caractérisé en ce qu'**un état fermé de ladite soupape de charge (48) est achevé et maintenu par la désaération de ladite entrée de commande (46).

16. Dispositif d'alimentation en air comprimé (10) selon une quelconque des revendications précédentes, **caractérisé en ce que** lesdits moyen à soupape (16, 18) sont des voies à 3/2 voies.

17. Dispositif d'alimentation en air comprimé (10) selon une quelconque des revendications précédentes, **caractérisé en ce qu'**une unité de commande électronique (12) est disposée et **en ce que** lesdits moyens à soupape (16, 18) sont des vannes magnétiques.

18. Dispositif d'alimentation en air comprimé (10) selon une quelconque des revendications précédentes, **caractérisé en ce que** ledit moyen à soupape de décharge (20) est une soupape à 2/2 voies.

19. Dispositif d'alimentation en air comprimé (10) selon une quelconque des revendications 9 à 18, **caractérisé en ce que** ledit moyen à soupape de régénération (34) est une soupape à 2/2 voies.

20. Dispositif d'alimentation en air comprimé (10) selon une quelconque des revendications 9 à 18, **caractérisé en ce que** ledit moyen à soupape de décharge et ledit moyen à soupape de régénération sont intégrés dans une soupape à 4/2 voies (50).

21. Procédé à commander un dispositif d'alimentation en air comprimé (10) comprenant une entrée d'air comprimé (26) apte à être couplé à un compresseur, une unité filtre (14) couplé via une ligne d'alimentation à ladite entrée d'air comprimé (26), un moyen à soupape de décharge (20, 50) couplé à une sortie de décharge (24) et à ladite ligne d'alimentation, une sortie de commande à économie d'énergie, qui est apte à être couplé à une entrée de commande dudit compresseur, et un premier moyen à soupape (16) ainsi qu'un deuxième moyen à soupape (18), il en étant prévu dans l'ensemble du procédé, que ledit moyen à soupape de décharge (20), ladite sortie de commande à économie d'énergie (28) et la régénération de ladite unité filtre (14) sont commandables moyennant lesdites moyens à soupape (16, 18), **caractérisé en ce qu'**une première entrée de commande (30) dudit moyen à soupape de décharge (20, 50), ladite sortie de commande à économie d'énergie (28) et la régénération de ladite unité filtre (14) sont commandées par ledit premier moyen à soupape (16), pendant qu'une deuxième entrée de commande (32) dudit moyen à soupape de décharge (20, 50) est commandée par ledit premier moyen à soupape (18).

22. Procédé (10) selon la revendication 21, **caractérisé en ce qu'**en un premier état de réglage, ledit premier moyen à soupape (16) désaère ladite première entrée de commande (30) dudit moyen à soupape de décharge (20, 50) et, en un deuxième état de réglage, ventile ladite première entrée de commande dudit moyen à soupape de décharge, et **en ce que** ledit moyen à soupape de décharge est changé en un état ouvert, quand ladite deuxième entrée de commande (32) est désaéré, par ventilation de ladite première entrée de commande.

23. Procédé (10) selon la revendication 21 ou 22, **caractérisé en ce qu'**en un premier état de réglage, ledit deuxième moyen à soupape (16) désaère ladite deuxième entrée de commande (32) dudit moyen à soupape de décharge (20, 50) et, en un deuxième d'état de réglage, ventile ladite deuxième entrée de commande dudit moyen à soupape de décharge (20, 50), et **en ce que** ledit moyen à soupape de décharge est fermé, quand ladite deuxième entrée de commande est ventilé, même quand ladite première entrée de commande (30) est ventilée.

24. Procédé (10) selon la revendication 23, **caractérisé en ce qu'**en un premier état de fonctionnement du dispositif d'alimentation en air comprimé, ledit premier moyen à soupape (16) se place en son premier état de réglage et ledit deuxième moyen à soupape (18) se place en son premier état de réglage, de façon, qu'un premier état de fonctionnement en alimentation soit établi.

25. Procédé (10) selon la revendication 23 ou 24, **caractérisé en ce qu'**en un deuxième état de fonctionnement du dispositif d'alimentation en air comprimé, ledit premier moyen à soupape (16) se place en son premier état de réglage et ledit deuxième moyen à soupape (18) se place en son deuxième état de réglage, de façon, qu'un premier état de fonctionnement en alimentation soit établi.

26. Procédé (10) selon une quelconque des revendications 23 à 25, **caractérisé en ce qu'**en un troisième état de fonctionnement du dispositif d'alimentation en air comprimé, ledit premier moyen à soupape (16) se place en son deuxième état de réglage et ledit deuxième moyen à soupape (18) se place en son premier état de réglage, de façon, qu'un état de fonctionnement en régénération soit établi.

27. Procédé (10) selon une quelconque des revendications 23 à 26, **caractérisé en ce qu'**en un quatrième état de fonctionnement du dispositif d'alimentation en air comprimé, ledit premier moyen à soupape (16) se place en son deuxième état de réglage et ledit deuxième moyen à soupape (18) se place en son deuxième état de réglage, de façon, qu'un état de fonctionnement en blocage soit établi.

28. Procédé (10) selon une quelconque des revendications 21 à 27, **caractérisé en ce que** ledit premier moyen à soupape (16) est disposé dans une voie d'air de régénération du dispositif d'alimentation en air comprimé.

29. Procédé (10) selon une quelconque des revendications 21 à 27, **caractérisé en ce qu'**un moyen à soupape de régénération (34) est commandée de manière pneumatique via ledit premier moyen à soupape (16), audit moyen à soupape de régénération étant disposé dans une voie d'air de régénération du dispositif d'alimentation en air comprimé.

30. Procédé (10) selon la revendication 29, **caractérisé en ce que** ledit moyen à soupape de régénération (34) comprend une première entrée de commande (36), via laquelle il est commandé de manière pneumatique par ledit premier moyen à soupape (16), et **en ce que** ledit moyen à soupape de régénération comprend une deuxième entrée de commande (38), via laquelle il est commandé de manière pneumatique par ledit deuxième moyen à soupape (18).

31. Procédé (10) selon la revendication 30, **caractérisé en ce qu'**en son premier état de réglage, ledit deuxième moyen à soupape (18) désaère ladite deuxième entrée de commande (38) dudit moyen à soupape de régénération (34) et, en son deuxième état de réglage, ventile ladite deuxième entrée de commande dudit moyen à soupape de régénération, et **en ce que** ledit moyen à soupape de régénération (34) est fermé, quand ladite deuxième entrée de commande (38) est ventilée, même quand ladite première entrée de commande (36) est ventilée.

32. Procédé (10) selon une quelconque des revendications 21 à 31, **caractérisé en ce que** ledit deuxième moyen à soupape (18) est couplé à une ligne de commande (40), via laquelle des fonctions de commande additionnelles sont réalisées dans le dispositif d'alimentation en air comprimé.

33. Procédé (10) selon la revendication 32, **caractérisé en ce que** ladite ligne de commande (40) est relié à une entrée de commande (42, 46) d'une soupape de décharge (44, 48) alimentant un circuit de charge.

34. Procédé (10) selon la revendication 33, **caractérisé en ce qu'**une ouverture de ladite soupape de charge (44) est assistée par la désaération de ladite entrée de commande (42)

35. Procédé (10) selon la revendication 33, **caractérisé en ce qu'**un état fermé de ladite soupape de charge (48) est achevé et maintenu par la désaération de ladite entrée de commande (46).

36. Procédé (10) selon une quelconque des revendications 21 à 35, **caractérisé en ce que** lesdits moyens à soupape (16, 18) sont commandés par une unité de commande électronique (12).
